# EUROPÄISCHE PATENTSCHRIFT

(11) **EP 0 655 163 B1**
(45) Veröffentlichungstag und Bekanntmachung des Hinweises auf die Patenterteilung: **14.05.1997**
(21) Anmeldenummer: 94920920.9
(22) Anmeldetag: 10.06.1994
(51) Int. Cl.: G11B 33/04, B65D 85/57

(54) **KLAPPBARE HÜLLE FÜR SCHEIBENFÖRMIGE GEGENSTÄNDE, INSBESONDERE COMPACTDISCS**
HINGED CASE FOR DISK-SHAPED OBJECTS, IN PARTICULAR COMPACT DISKS
BOITE A COUVERCLE RABATTABLE POUR OBJETS SE PRESENTANT SOUS FORME DE DISQUES, NOTAMMENT DES DISQUES COMPACTS

(30) Priorität: 12.06.1993 DE 4319548
(43) Veröffentlichungstag der Anmeldung: 31.05.1995
(73) Patentinhaber: NEOPLASTIK KUNSTSTOFF-TECHNIK DR. WORBS GMBH, D-38112 Braunschweig (DE)
(72) Erfinder: GOEDECKE, Christoph, D-38239 Salzgitter (DE)
(74) Vertreter: Lins, Edgar, Dipl.-Phys. Dr.jur.
(86) Internationale Anmeldenummer: EP9401895
(87) Internationale Veröffentlichungsnummer: WO9429869

(56) Entgegenhaltungen:
- EP-A- 0 272 042
- WO-A-92/22065
- WO-A-92/22066
- DE-U- 9 201 879
- US-A- 3 712 477

## Beschreibung

Die Erfindung betrifft eine klappbare Hülle für scheibenförmige Gegenstände, insbesondere Compactdiscs, mit einem Boden und einem Deckel, der über eine mit einem in eine Ausnehmung ragenden Bolzen hergestellte Scharnierverbindung in übergreifenden Wänden klappbar mit dem Boden verbunden ist, und mit einer zwischen Boden und Deckel eingelegten Trägerplatte, die mit einem Ansatz über die Scharnierverbindung ragt und gegen ein Abheben vom Boden gesichert ist.

Derartige Hüllen (die z.B. durch das Gebrauchsmuster DE-U-9 201 879 bekannt sind) werden für den Transport und die Aufbewahrung von Compactdiscs (CDs) verwendet. Deckel und Boden bestehen überwiegend aus einem durchsichtigen Kunststoff, während die Trägerplatte aus einem undurchsichtigen Kunststoff besteht. Die Trägerplatte weist mittig sternförmig angeordnete Rastnasen auf, die in eine zentrale Öffnung der CD eingreifen und diese klemmend an der Trägerplatte halten.

Boden und Deckel weisen vertikale Wände auf, die einander übergreifen. Die das Klappen ermöglichende Scharnierverbindung besteht aus an zwei gegenüberliegenden Wänden des Deckels angespritzten, nach innen gerichteten Bolzen, die in entsprechende Durchgangslöcher der zugehörigen vertikalen Wand des Bodens hineinragen.

Im Bereich der Scharnierverbindung weist der Deckel in seiner horizontalen Wand eine Ausnehmung auf, in die ein Ansatz der im Boden unverschiebbar eingerasteten Trägerplatte ragt, so daß der Ansatz mit der Oberseite des geschlossenen Deckels fluchtet. Auf diese Weise wird über die vertikalen Wände hinaus eine Verriegelung des geschlossenen Deckels bewirkt.

Die klappbaren, mit einer CD gefüllten Hüllen werden üblicherweise an der dem Scharnier gegenüberliegenden Kante mit einem klebenden Siegel versehen, wodurch eine Entnahme der CD nur nach Öffnen des Siegels möglich sein soll. Es ist jedoch beobachtet worden, daß eine CD ohne Öffnung des Siegels aus der Hülle entnommen worden ist, indem die die Bolzen tragenden Enden der Wände des Deckels so weit auseinander gedrückt worden sind, daß die Bolzen nicht mehr in die Durchgangslöcher des Bodens eingriffen, so daß der Deckel an der Scharnierseite vom Boden abgehoben werden konnte und der Zugriff zur CD ohne Beschädigung des Siegels möglich war.

Die sich hieraus ergebende Problemstellung für die vorliegende Erfindung besteht darin, eine ohne wesentlichen Zusatzaufwand zu erstellene konstruktive Ausgestaltung der Hülle zu verwirklichen, die den geschilderten Mißbrauch nicht mehr erlaubt.

Die erfindungsgemäße Lösung dieser Problemstellung besteht darin, daß eine klappbare Hülle der eingangs erwähnten Art dadurch gekennzeichnet ist, daß die Ausnehmung zum Rand der sie aufweisenden Wand offen ausgebildet ist, daß der Bolzen durch die Ausnehmung ragt und an seinem freien Ende einen Flansch aufweist, dessen Durchmesser größer als der der Ausnehmung ist und daß die Trägerplatte auf der offenen Seite der Ausnehmung an dem Flansch anliegt und so den Austritt des Bolzens aus der Ausnehmung versperrt.

Erfindungsgemäß sind die die Scharnierverbindung herstellenden Bolzen mit einem Flansch versehen, der ein seitliches Herausziehen der Bolzen aus der Ausnehmung verhindert. Als Konsequenz ergibt sich, daß der erfindungsgemäße Bolzen nicht mehr axial zur Ausnehmung einführbar ist, sondern radial eingeführt werden muß. Zu diesem Zweck ist die Ausnehmung zum Rand der sie aufweisenden Wand, also radial, offen und erlaubt so die radiale Einführung des Bolzens (innerhalb des Flansches) in die Ausnehmung. Nun würde aber die radial offene Ausnehmung das Abheben des Deckels vom Boden eher erleichtern, da der Bolzen nicht mehr aus der Ausnehmung axial herausgezogen werden müßte, bevor das Anheben des Deckels auf der Scharnierseite möglich ist. Erfindungsgemäß trägt die Trägerplatte zur Verriegelung des Bolzens in der radial offenen Ausnehmung bei, indem die Trägerplatte von der offenen Seite der Ausnehmung her jedenfalls an dem Flansch anliegt und so ein Anheben des Bolzens aus der Ausnehmung heraus verhindert.

Die Verriegelung des Bolzens in der Ausnehmung wird noch dadurch unterstützt, daß die Öffnung der Ausnehmung zur dem Scharnier nahen Kante von Boden und Deckel gerichtet ausgebildet ist. Hierdurch wird das Abheben des Deckels vom Boden ebenfalls verhindert, weil das Abheben eine Verschiebung des Deckels gegenüber dem Boden nach hinten, also zur Scharnierseite hin, erfordern würde und diese Bewegung aufgrund der vertikalen Wände von Boden und Deckel ohne Aufklappen der Hülle, also ohne Öffnung der Versiegelung, nicht möglich ist.

Die genannte Ausrichtung der Öffnung der Ausnehmung zur nahen Kante hin würde bereits allein die oben bereits erwähnte mißbräuchliche Öffnung einer versiegelten Hülle verhindern, jedoch die Gefahr mit sich bringen, daß die Scharnierverbindung im normalen Gebrauch unabsichtlich gelöst wird. Dies wird durch die Abdeckung der Öffnung durch die Trägerplatte wirksam verhindert.

Die Ausnehmung ist vorzugsweise etwas größer als ein Halbkreis mit einem dem Außendurchmesser des Bolzens entsprechenden Innendurchmesser, so daß der Bolzen in die Ausnehmung einschnappbar ist. Dadurch wird eine gewisse Selbsthaltung des Bolzens in der Ausnehmung bewirkt, so daß die Abstützung des Flansches an der Trägerplatte nur in besonderen Belastungsfällen erforderlich ist und nur dann eine zusätzliche Reibung bei der Klappbewegung bewirkt.

Die Öffnung der Ausnehmung ist vorzugsweise durch trichterförmig angeordnete Kanten gebildet, deren Symmetrielinie zweckmäßigerweise zur dem Scharnier nahen Kante von Boden und Dekkel gerichtet ist.

Die Scharnierverbindung mit Bolzen und Ausnehmung ist zweckmäßigerweise auf beiden gegenüberliegenden Seiten der Hülle identisch ausgebildet.

Die Trägerplatte ist in einer bevorzugten Ausführungsform mit wenigstens einer parallel zu den mit Bolzen und Aufnahme versehenen Wänden stehenden Wand versehen und liegt mit dieser an dem Flansch wenigstens eines Bolzens an. Dabei kann die Wand der Trägerplatte eine abgerundete Ausnehmung aufweisen, die zweckmäßigerweise eine Krümmung aufweist, die dem Durchmesser des Flansches entspricht, um so eine gleichmäßige Abstützung des Flansches während der Klappbewegung des Deckels relativ zum Boden zu gewährleisten.

Die Erfindung soll im folgenden anhand eines in der Zeichnung dargestellten Ausführungsbeispiels näher erläutert werden. Es zeigen:
- Figur 1 -: eine Draufsicht auf einen Deckel der Hülle
- Figur 2 -: einen Schnitt entlang der Linie A-A in Figur 1
- Figur 3 -: eine Draufsicht auf einen Boden der Hülle
- Figur 4 -: eine Seitenansicht des Bodens gemäß Figur 3
- Figur 5 -: eine Draufsicht auf eine Trägerplatte der Hülle
- Figur 6 -: einen Schnitt entlang der Linie A-A in Figur 5
- Figur 7 -: eine Seitenansicht der Trägerplatte gemäß Figur 5
- Figur 8 -: eine perspektivische Darstellung der Teile von Boden, Deckel und Trägerplatte, die an der Ausbildung eines Scharniers mitwirken
- Figur 9 -: eine perspektivische Darstellung eines aufgeklappten Deckelteils, dessen Bolzen in eine Ausnehmung des Bodens eingesetzt ist
- Figur 10 -: eine explodierte Darstellung der Teile gemäß Figur 8 in der Montageanordnung.

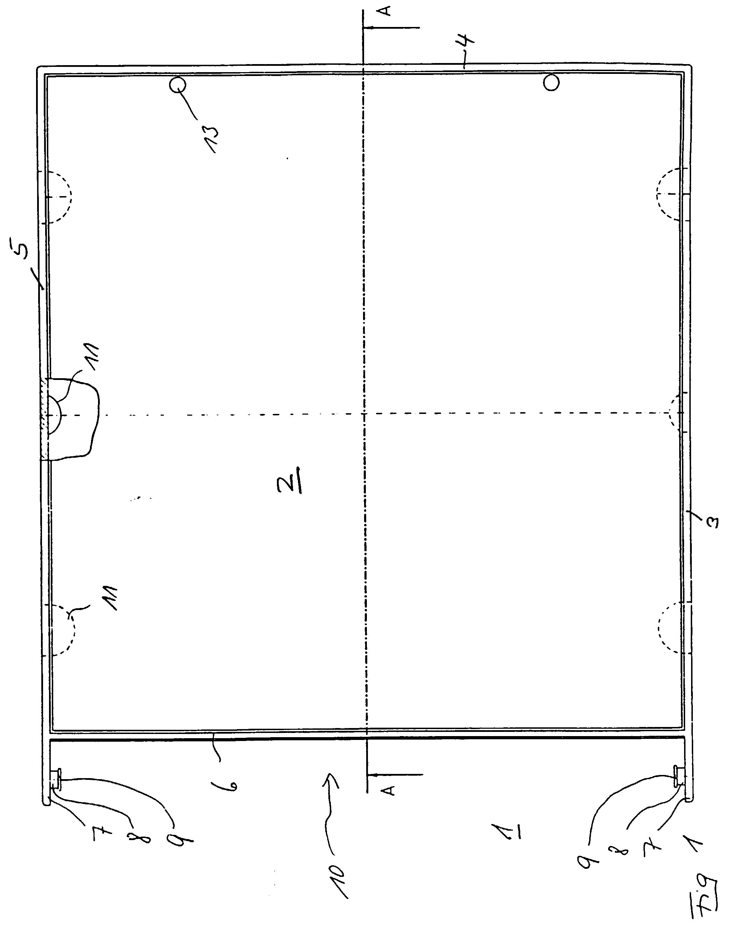

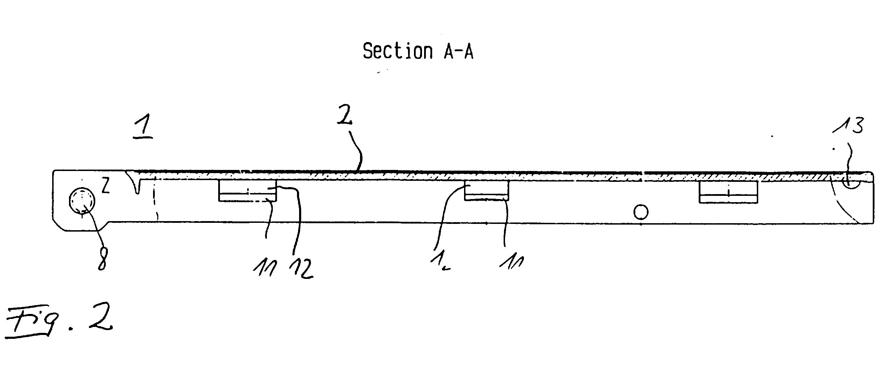

Die Figuren 1 und 2 zeigen einen Deckel 1, der aus einer horizontalen Wand 2 sowie drei vertikalen Wänden 3, 5, 6 an den Rändern der horizontalen Wand 2 besteht, während an der stirnseitigen freien Kante 4 keine vertikale Wand ausgebildet ist. Zur Bildung eines Scharniers sind gegenüberliegende Längswände 3, 5 über die horizontale Wand 2 hinaus mit verlängerten Ansätzen 7 ausgebildet, von denen aus jeweils ein Bolzen 8 nach innen vorsteht. Jeder Bolzen 8 ist mit einem abschließenden Flansch 9 versehen, dessen Durchmesser größer als der des Bolzens 8 ist.

Durch die verlängerten Ansätze 7 ist zwischen den Ansätzen 7 fluchtend mit der horizontalen Wand 2 eine Ausnehmung 10 ausgebildet.

Parallel und mit Abstand zur horizontalen Wand 2 weist der Deckel 2 kreissegmentförmige Halterungen 11 auf, die mit der horizontalen Wand 2 einen Zwischenraum 12 zum Einschieben von Einlageblättern zur Kennzeichnung und Bewerbung der CD bilden. Zwei nach unten ragende Erhebungen 13 kurz vor der stirnseitigen Kante 4 dienen zur örtlichen Fixierung eines Einlageblattes.

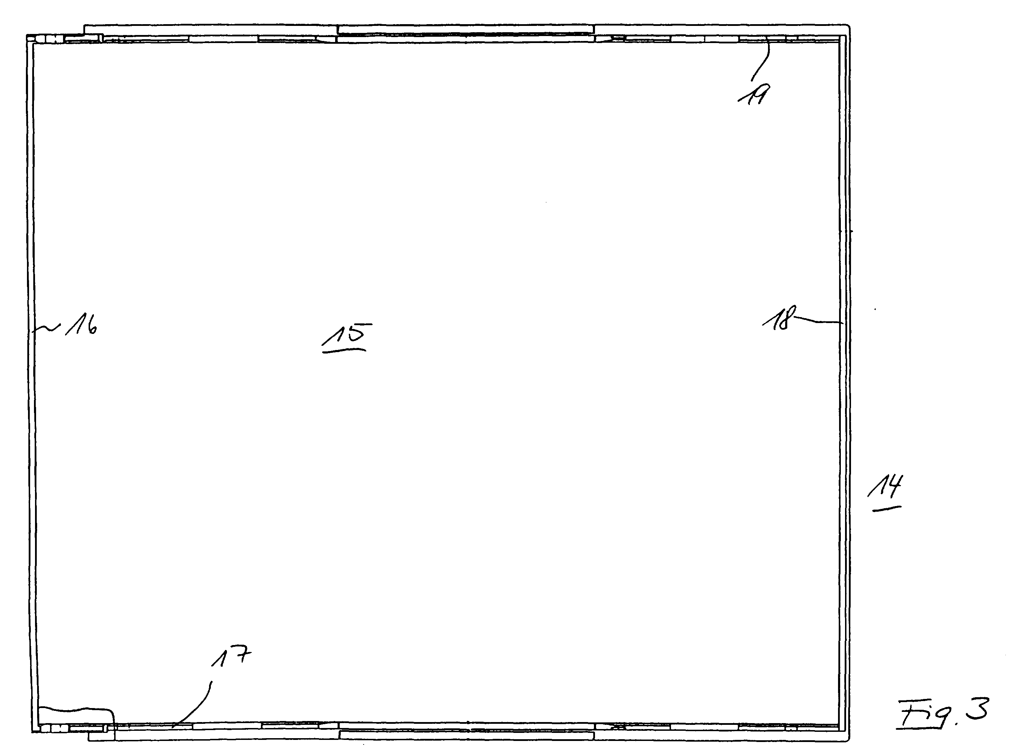

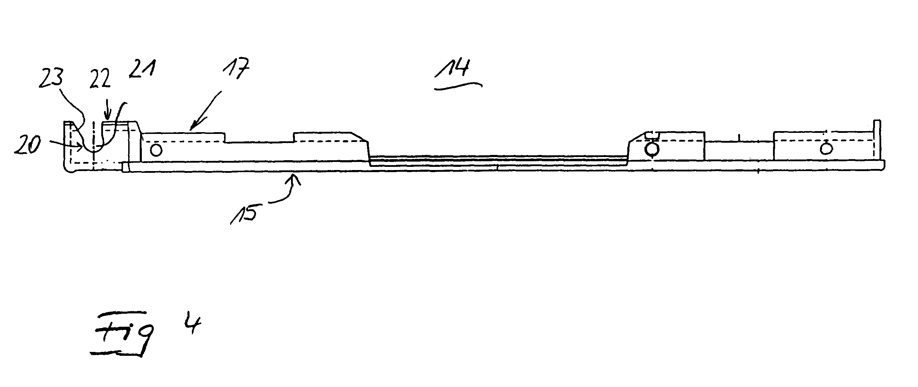

Figuren 3 und 4 zeigen einen Boden 14, der aus einer horizontalen Bodenwand 15 sowie am Rand der Bodenwand 15 umlaufend angeordneten vertikalen Wänden 16, 17, 18, 19 besteht. Die beiden Längswände 17, 19 sind in an sich bekannter Weise mittig unterbrochen und lassen Platz für den Rand der kreisförmigen CD. Kurz vor der scharnierseitigen vertikalen Wand 16 sind die Längswände 17, 19 mit je einer Ausnehmung 20 versehen, die einen unteren kreissegmentförmigen Teil 21 und zum oberen Rand der Längswand 17, 19 trichterförmig erweitert verlaufende Kanten 23 aufweist. In dem in Figur 4 dargestellten Ausführungsbeispiel weist das kreissegmentförmige Teil 21 eine etwas über ein Halbkreissegment hinausgehende Größe auf, so daß sich am Übergang des kreissegmentförmigen Teils 21 zu den Kanten 23 eine Verengung ergibt. Ausgehend von dieser Verengung erstreckt sich die vordere der Kanten 23 etwa senkrecht zur Bodenwand 15 nach oben, während die hintere der Kanten 23 schräg nach hinten geneigt ist. Der Innendurchmesser des kreissegmentförmigen Teils 21 der Ausnehmung 20 entspricht dem Außendurchmesser des Bolzens 8 des Deckels 1. Soll der Bolzen 8 über die am Übergang zu den Kanten 23 gebildete Verengung aus dem ihn aufnehmenden kreissegmentförmigen Teil 21 herausgezogen werden, ist dies nur mit einer schräg nach hinten gerichteten Aufwärtsbewegung möglich.

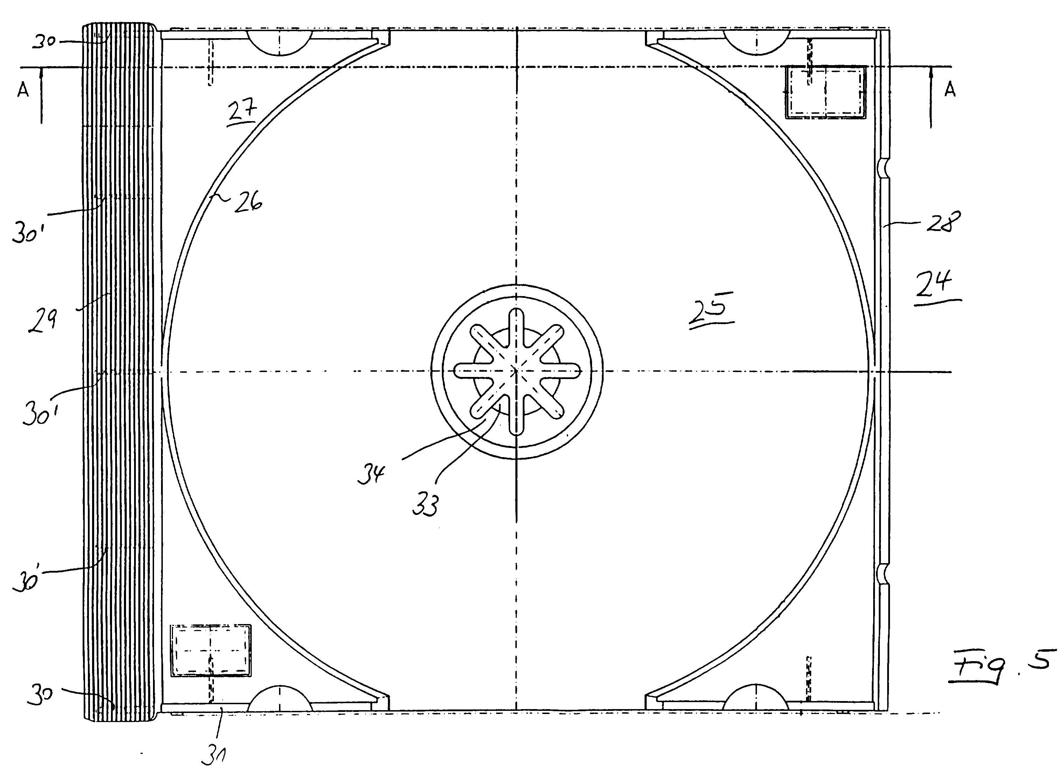

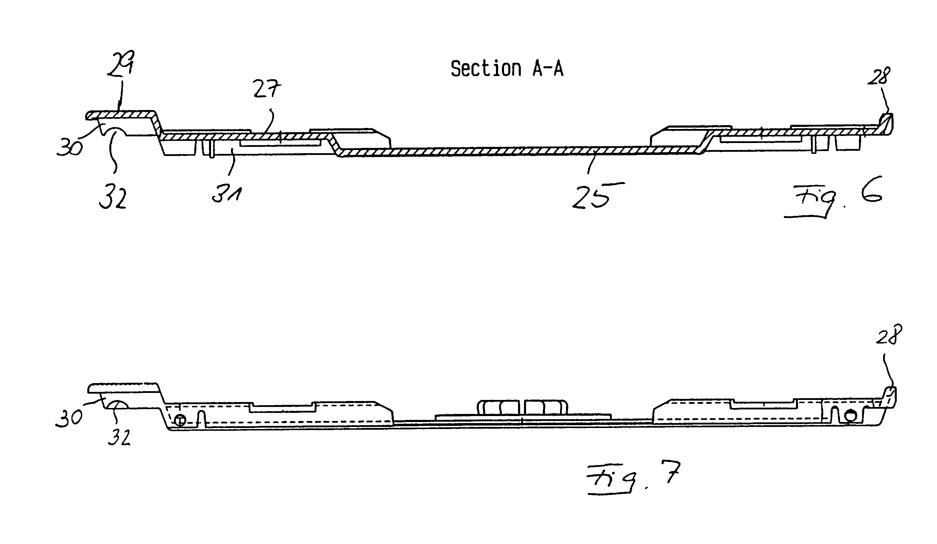

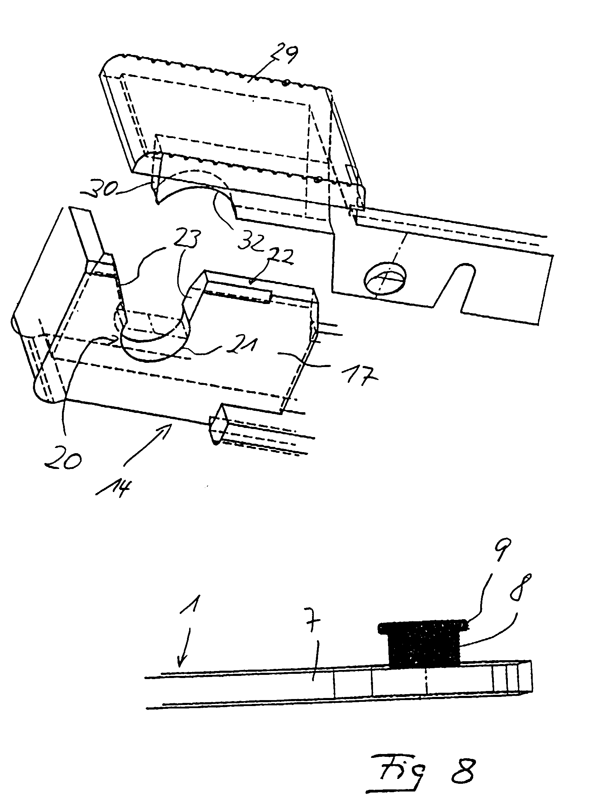

Die Figuren 5 bis 7 zeigen eine Trägerplatte 24, die im wesentlichen wie bei den herkömmlichen CD-Hüllen ausgebildet ist. Die Trägerplatte 24 weist ein etwa kreisförmig ausgebildetes Plattenteil 25 auf, dessen Durchmesser an den Durchmesser der CD angepaßt ist. Über eine Abstufung 26 schließen sich höher gelegene Fortsetzungsstücke 27 an, die in eine vordere vertikale Wand 28 bzw. in einen hinteren Ansatz 29 übergehen, der gegenüber den Fortsetzungsstücken 27 wiederum erhöht ausgebildet ist und so im montierten Zustand mit der horizontalen Wand 2 des Deckels 1 fluchtet und die Ausnehmung 10 ausfüllt. Der Ansatz 29 ist mit vertikalen Stegen 30, 30' stabilisiert, von denen zwei vertikale Stege 30 in Verlängerung von niedrigen, nach unten ragenden vertikalen Wänden 31 an den Längskanten der Fortsetzungsstücke 27 angeordnet sind.

Erfindungsgemäß ragen die vertikalen Stege 30 über die Flansche 9 der beiden Bolzen 8 und sind zur Anlage an den Flanschen 9 mit einer gekrümmten Ausnehmung 32 versehen, deren Krümmungsradius dem Radius des Flansches 9 angepaßt ist.

Die Trägerplatte 24 ist mittig mit sternförmig angeordneten Rastnasen 33 versehen, die an federnden Schenkeln 34 angebracht sind und rastend in das Mittelloch einer CD eingreifen und so diese an der Trägerplatte 24 fixieren können.

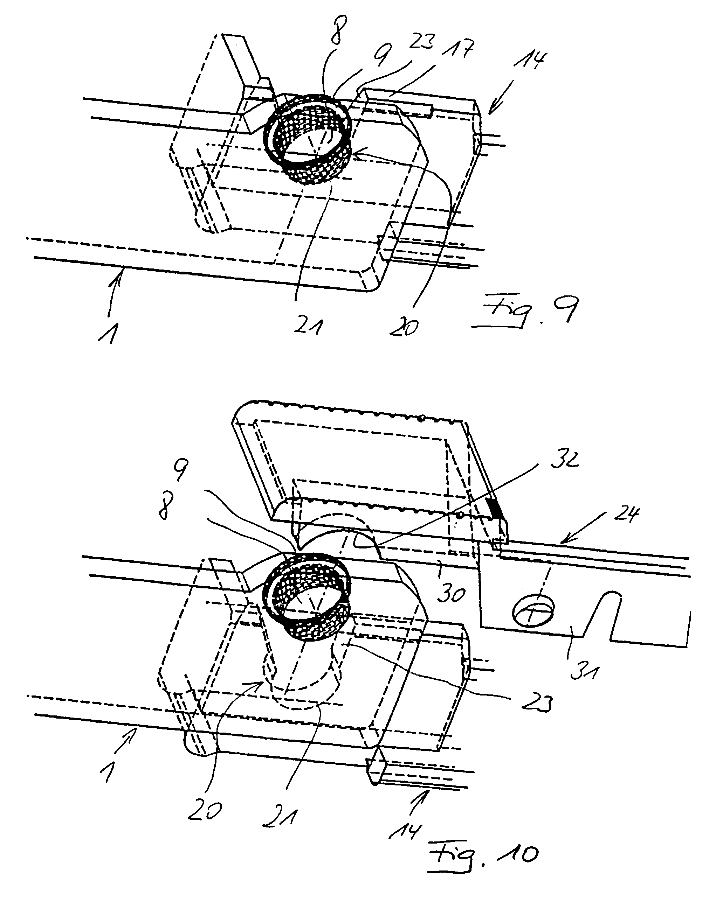

Die so beschriebenen Einzelteile Deckel 1, Boden 14 und Trägerplatte 24 bilden gemeinsam eine Scharnierverbindung, wie dies anhand der Figuren 8 bis 10 erläutert wird.

Der Deckel 1 ist in Figur 8 in der aufgeklappten Stellung gezeigt, und zwar nur mit dem am Scharnierende befindlichen Teil, an dem sich der Bolzen 8 mit dem Flansch 9 befindet. Die Länge des Bolzens 8 zwischen dem Flansch 9 und der zugehörigen vertikalen Wand 7 entspricht der Breite der vertikalen Wand 17 des Bodens 14, in der die Ausnehmung 20 ausgebildet ist.

Der vertikale Steg 30 des Ansatzes 29 ist seitlich nach innen versetzt zur vertikalen Wand 17 des Bodens 14 angeordnet und überdeckt mit seiner abgerundeten Ausnehmung 32 den Flansch 9 des Bolzens 8.

Figur 9 zeigt die Scharnierausbildung zwischen dem offenen Deckel 1 und dem Boden 14 (Boden und Deckel bilden somit einen Winkel von 180° miteinander). Dabei ist der Bolzen 8 in den kreissegmentförmigen Teil 21 der Ausnehmung 20 eingesetzt, so daß sein Flansch 9 jenseits der Ausnehmung 20 an der vertikalen Wand 17 anliegt.

Figur 10 zeigt die für die Scharnierverbindung wesentlichen Teile von Deckel 1, Boden 14 und Trägerplatte 24 in Montagestellung, jedoch in explodierter Darstellung.

Die Trägerplatte 24 ist in den Boden 14 in konventioneller Weise eingerastet, so daß diese Verbindung hier nicht näher erläutert werden muß.

## Patentansprüche

1. Klappbare Hülle für scheibenförmige Gegenstände, insbesondere Compactdiscs, mit einem Boden (14) und einem Deckel (1), der über eine mit einem in eine Ausnehmung (20) ragenden Bolzen (8) hergestellte Scharnierverbindung in übergreifenden Wänden (3, 5; 17, 19) klappbar mit dem Boden (14) verbunden ist, und mit einer zwischen Boden (14) und Deckel (1) eingelegten Trägerplatte (24), die mit einem Ansatz (29) über die Scharnierverbindung ragt und gegen ein Abheben vom Boden gesichert ist, **dadurch gekennzeichnet, daß** die Ausnehmung (20) zum Rand (22) der sie aufweisenden Wand (17) offen ausgebildet ist, daß der Bolzen (8) durch die Ausnehmung (20) ragt und an seinem freien Ende einen Flansch (9) aufweist, dessen Durchmesser größer als der der Ausnehmung (20) ist und daß die Trägerplatte (24) auf der offenen Seite der Ausnehmung (20) an dem Flansch (9) anliegt und so den Austritt des Bolzens (8) aus der Ausnehmung (20) versperrt.

2. Klappbare Hülle nach Anspruch 1, dadurch gekennzeichnet, daß die Öffnung der Ausnehmung (20) zur nahen Kante (16) von Boden (14) und Deckel (1) gerichtet ausgebildet ist.

3. Klappbare Hülle nach Anspruch 1 oder 2, dadurch gekennzeichnet, daß die Ausnehmung (20) etwas größer als ein Halbkreis mit einem dem Außendurchmesser des Bolzens (8) entsprechenden Innendurchmesser ist, so daß der Bolzen in die Ausnehmung (20) einschnappbar ist.

4. Klappbare Hülle nach einem der Ansprüche 1 bis 3, dadurch gekennzeichnet, daß die Öffnung durch trichterförmig angeordnete Kanten (23) gebildet ist.

5. Klappbare Hülle nach Anspruch 4, dadurch gekennzeichnet, daß eine Symmetrielinie der Kanten (23) der Öffnung zur nahen Kante (16) von Boden (14) und Deckel (1) geneigt ist.

6. Klappbare Hülle nach einem der Ansprüche 1 bis 5, dadurch gekennzeichnet, daß die Scharnierverbindung auf gegenüberliegenden Seiten der Hülle identisch ausgebildet ist.

7. Klappbare Hülle nach einem der Ansprüche 1 bis 6, dadurch gekennzeichnet, daß die Trägerplatte (24) mit wenigstens einem parallel zu den mit Bolzen (8) und Aufnahme (20) versehenen Wänden (3, 5; 17, 19) stehenden Wandstück (30) an dem Flansch (9) wenigstens eines Bolzens (8) anliegt.

8. Klappbare Hülle nach Anspruch 7, dadurch gekennzeichnet, daß das Wandstück (30) der Trägerplatte (24) eine abgerundete Ausnehmung (32) aufweist.

9. Klappbare Hülle nach Anspruch 8, dadurch gekennzeichnet, daß die abgerundete Ausnehmung (32) eine dem Durchmesser des Flansches (9) entsprechende Krümmung aufweist.

## Claims

1. A hinged case for disk-shaped objects, in particular compact disks, with a base (14) and a lid (1), which is hingedly connected to the base (14) via a hinge connection in overlapping walls (3, 5; 17, 19) formed by means of a bolt (8) projecting into a recess (20), and with a support plate (24), which is inserted between the base (14) and lid (1), projects with a shoulder (29) over the hinge connection and is secured against lifting from the base, characterised in that the recess (20) is open towards the edge (22) of the wall (17) comprising said recess, the bolt (8) projects through the recess (20) and at its free end comprises a flange (9), whose diameter is greater than that of the recess (20) and the support plate (24) rests against the flange (9) on the open side of the recess (20), and thus blocks the exit of the bolt (8) from the recess (20).

2. A hinged case according to claim 1, characterised in that the opening of the recess (20) is directed towards the nearby edge (16) of the base (14) and lid (1).

3. A hinged case according to claim 1 or 2, characterised in that the recess (20) is somewhat larger than a semi-circle with an internal diameter corresponding to the external diameter of the bolt (8), so that the bolt Can be snapped into the recess (20).

4. A hinged case according to one of claims 1 to 3, characterised in that the opening is formed by edges (23) arranged in the shape of a funnel.

5. A hinged case according to claim 4, characterised in that a line of symmetry of the edges (23) of the opening is inclined towards the nearby edge (16) of the base (14) and lid (1).

6. A hinged case according to one of claims 1 to 5, characterised in that the hinge connection is identically constructed on opposing sides of the case.

7. A hinged case according to one of claims 1 to 6; characterised in that the support plate (24) rests against the flange (9) of at least one bolt (8) with at least one wall part (30) lying parallel to the walls (3, 5; 17, 19) provided with bolt (8) and recess (20).

8. A hinged case according to claim 7, characterised in that the wall part (30) of the support plate (24) comprises a rounded recess (32).

9. A hinged case according to claim 8, characterised in that the rounded recess (32) has a curvature corresponding to the diameter of the flange (9).

## Revendications

1. Boîte à couvercle rabattable pour objets se présentant sous forme de disques, notamment disques compacts, comportant un fond (14) et un couvercle (1) qui est lié de manière rabattable avec le fond (14) par l'intermédiaire d'une liaison par charnière formée dans des parois en chevauchement (3, 5; 17, 19) au moyen d'un tourillon (8) engagé dans un évidement (20), et comportant une plaque porteuse (24) insérée entre fond (14) et couvercle (1), qui est empêchée de se soulever du fond et dépasse au-dessus de la liaison par charnière par un appendice (29), caractérisée en ce que l'évidement (20) est réalisé ouvert dans le bord (22) de la paroi (17) qui le comporte, en ce que le tourillon (8) traverse l'évidement (20) et présente à son extrémité libre une collerette (9) dont le diamètre est supérieur à celui de l'évidement (20), et en ce que la plaque porteuse (24) s'appuie sur la collerette (9) du côté ouvert de l'évidement (20) et empêche ainsi le tourillon (8) de s'échapper de l'évidement (20).

2. Boîte à couvercle rabattable selon la revendication 1, caractérisée en ce que l'ouverture de l'évidement (20) est réalisée avec une orientation vers le bord proche (16) du fond (14) et du couvercle (1).

3. Boîte à couvercle rabattable selon la revendication 1 ou 2, caractérisée en ce que l'évidement (20) est un peu plus grand qu'un demi-cercle de diamètre intérieur correspondant au diamètre extérieur du tourillon (8) de sorte que le tourillon est encliquetable dans l'évidement (20).

4. Boîte à couvercle rabattable selon l'une des revendications 1 à 3, caractérisée en ce que l'ouverture est réalisée par des bords (23) disposés en entonnoir.

5. Boîte à couvercle rabattable selon la revendication 4, caractérisée en ce qu'un axe de symétrie des bords (23) de l'ouverture est incliné vers le bord proche (16) du fond (14) et du couvercle (1).

6. Boîte à couvercle rabattable selon l'une des revendications 1 à 5, caractérisée en ce que la liaison par charnière est réalisée identique sur des côtés opposés de la boîte.

7. Boîte à couvercle rabattable selon l'une des revendications 1 à 6, caractérisée en ce que la plaque porteuse (24) s'appuie sur la collerette (9) d'au moins un tourillon (8) par au moins une partie de paroi (30) s'étendant parallèlement aux parois (3, 5; 17, 19) munies de tourillon (8) et de cages (20).

8. Boîte à couvercle rabattable selon la revendication 7, caractérisée en ce que la partie de paroi (30) de la plaque porteuse (24) présente un évidement arrondi (32).

9. Boîte à couvercle rabattable selon la revendication 8, caractérisée en ce que l'évidement arrondi (32) présente une courbure correspondant au diamètre de la collerette (9).
